# EUROPÄISCHE PATENTSCHRIFT

(11) **EP 3 050 756 B1**
(45) Veröffentlichungstag und Bekanntmachung des Hinweises auf die Patenterteilung: **03.01.2018**
(21) Anmeldenummer: 16151291.8
(22) Anmeldetag: 14.01.2016
(51) Int. Cl.: B60R 11/04, B60R 19/52

(54) **ANORDNUNG EINER AUSFAHRBAREN KAMERA AN EINEM KRAFTFAHRZEUG**
ASSEMBLY OF AN EXTENSIBLE CAMERA ON A MOTOR VEHICLE
AGENCEMENT D'UNE CAMERA DEPLOYABLE SUR UN VEHICULE AUTOMOBILE

(30) Priorität: 02.02.2015 DE 102015201744
(43) Veröffentlichungstag der Anmeldung: 03.08.2016
(73) Patentinhaber: Volkswagen Aktiengesellschaft, 38440 Wolfsburg (DE)
(72) Erfinder: Bär, Christian, 38440 Wolfsburg (DE); Schrickel, Frank, 38524 Sassenburg (DE); Babel, Andreas, 38553 Wasbüttel (DE)

(56) Entgegenhaltungen:
- DE-A1- 10 037 222
- DE-A1-102010 026 268
- DE-B4- 10 059 786
- JP-A- 2003 159 997
- JP-A- 2005 271 715
- KR-A- 20070 023 243

## Beschreibung

Die Erfindung betrifft ein Kraftfahrzeug mit einem Kühlerschutzgitter und einer an dem Kraftfahrzeug im Bereich des Kühlerschutzgitters angeordneten ausfahrbaren Kamera gemäß dem Oberbegriff des Anspruchs 1, welche zwischen einer Ruhelage und einer Betriebslage verfahrbar sein soll.
Aus DE 100 59 786 B4 ist eine Kamara für ein Kraftfahrzeug bekannt, die zum Verfahren zwischen einer Ruhelage in eine Betriebslage in Fahrzeuglängsrichtung verfahrbar ist. Die Kamera soll ferner vertikal und horizontal verschwenkbar sein.

Aus DE 100 37 222 A1 ist eine Kameraeinrichtung für Kraftfahrzeuge bekannt, die insbesondere zur Realisierung einer Rückspiegelfunktion dienen soll. Die Kameraeinrichtung ist dazu im Bereich des Hecks eines Kraftfahrzeuges angeordnet. Zum Schutz der Kameraeinrichtung kann diese von einer in Fahrzeugquerrichtung orientierten Ruhelage in eine in Fahrzeuglängsrichtung orientierte Betriebslage verschwenkt werden. Details zur Konstruktion und Anordnung der Kamera sind in DE 100 37 222 A1 nicht offenbart.

Aus DE 10 2010 026 268 A1 ist eine Kamera für ein Kraftfahrzeug bekannt, die zum Verfahren zwischen einer Ruhelage in eine Betriebslage in Fahrzeuglängsrichtung verfahrbar ist. Die Kamera soll ferner mittels eines motorisch angetriebenen Schwenkmechanismus in der Betriebslage in mehreren Freiheitsgraden bewegbar sein. In der Ruhelage ist die Kamera von vorne durch eine Klappe verdeckt und somit geschützt.

Aus JP 2003 159997 A ist eine Anordnung bekannt, bei der eine ausfahrbare Kamera hinter einem klappbaren Emblem im Bereich eines Kühlerschutzgitters angeordnet ist. In Ruhelage ist die Kamera hinter dem Emblem angeordnet und in Fahrzeughochrichtung betrachtet nach unten orientiert. Um eine Betriebslage einzunehmen, klappen das Emblem und die Kamera um eine in Fahrzeugquerrichtung orientierte Schwenkachse nach vorne, bis die Kamera in eine nach vorne und nach unten gerichtete Position verfahren ist. Diese Anordnung erfordert viele bewegliche Einzelelemente. Aus KR 10-2007-0023243 ist ein Fahrzeug gemäß dem Oberbegriff von Anspruch 1 bekannt.

Der Erfindung liegt die Aufgabe zugrunde, eine Anordnung einer Kamera an einem Kraftfahrzeug zur Verfügung zu stellen, die eine kostengünstige Möglichkeit schafft, die Kamera zwischen einer Ruhelage und einer Betriebslage so zu bewegen, dass die Kamera in der Ruhelage geschützt angeordnet ist und in der Betriebslage eine gegenüber einem anderen Objekt des Kraftfahrzeugs, insbesondere gegenüber dem Kühlerschutzgitter, eine möglichst prominente Position einnimmt.
Die Lösung der Aufgabe erfolgt erfindungsgemäß mit den Merkmalen des Anspruchs 1. Weitere praktische Ausführungsformen sind in Verbindung mit den Unteransprüchen beschrieben.
Bei einem erfindungsgemäßen Kraftfahrzeug mit einem Kühlerschutzgitter und einer an dem Kraftfahrzeug im Bereich des Kühlerschutzgitters angeordneten ausfahrbaren Kamera, welche mittels eines Antriebselements zwischen einer Ruhelage und einer überwiegend in Fahrzeuglängsrichtung orientierten Betriebslage verfahrbar ist und wobei die Kamera um mindestens eine Schwenkachse verschwenkbar gelagert ist, ist die geschützte Ruhelage eine überwiegend in Fahrzeugquerrichtung orientierte Ausrichtung der Kamera. Die Höhe der Kamera und/oder eines die Kamera umgebenden Gehäuses ist geringer als der Abstand zweier benachbarter Rippen des Kühlerschutzgitters und die Kamera schwenkt in ihrer Betriebslage zwischen zwei benachbarten Kühlerschutzrippen hervor.
Diese Ruhelage mit einer überwiegend in Fahrzeugquerrichtung orientierten Ausrichtung hat den Vorteil, dass auf Schutzelemente wie separate Klappen oder sonstige, die Kamera vor Steinschlägen etc. schützenden Vorrichtungen verzichtet werden kann, da die Kamera in Ruhelage so orientiert ist, dass die Hauptachse der Kameralinse überwiegend in Fahrzeugquerrichtung orientiert ist. Besonders bevorzugt ist es, wenn die Kamera in der geschützten Ruhelage so ausgerichtet ist, dass die Kameralinse und die Kamera selbst aufgrund ihrer Anordnung in Ruhelage vor sich in Fahrzeuglängsrichtung von vorne auf das Kraftfahrzeug zubewegenden Gegenständen (z.B. aufgewirbelte Steine, Äste etc.) geschützt ist. Vorteilhaft ist es, dass die Kamera zum Verfahren zwischen Betriebslage und Ruhelage um eine sich überwiegend in Fahrzeughochrichtung erstreckende Schwenkachse verschwenkt wird. Dies gilt insbesondere für Anordnungen, bei denen die Kamera während des Verfahrens zwischen Betriebslage und Ruhelage zwischen zwei Rippen eines Kühlerschutzgitters verfahren wird. Denn in diesem Fall kann durch Wahl eines geeignet großen Abstandes zwischen der Kameralinse und der Drehachse die Kamera während des Verfahrens von der Ruhelage in die Betriebslage auf einfache Art und Weise in Fahrzeuglängsrichtung nach vorne verfahren werden, um beispielsweise in der Betriebslage möglichst weit gegenüber einem Kühlerschutzgitter hervorzuragen.

Die Höhe der Kamera und/oder eines die Kamera umgebenden Gehäuses ist geringer als der Abstand zweier benachbarter Rippen des Kühlerschutzgitters. Dadurch kann die Kamera so angeordnet werden, dass sie in ihrer Ruhelage innerhalb oder hinter dem Kühlerschutzgitter angeordnet ist und in ihrer Betriebslage zwischen zwei benachbarten Kühlerschutzrippen hervorschwenkt. Die Kamera tritt in diesem Fall in Ruhelage dezent in den Hintergrund und wirkt sich weder durch eine zusätzliche Schutzklappe noch durch eine optische Unregelmäßigkeit im Kühlerschutzgitter negativ auf das Design des Kraftfahrzeuges aus. Dies gilt umso mehr, je weiter die Kamera in ihrer Ruhelage gegenüber dem Kühlerschutzgitter in Fahrzeuglängsrichtung betrachtet nach hinten verschwenkt wird und somit im Kühlerschutzgitter "eintaucht".

Es ist bevorzugt, wenn bei einer erfindungsgemäßen Anordnung die Kamera in einem Gehäuse angeordnet ist und das Gehäuse um eine karosseriefeste Schwenkachse verschwenkbar gelagert ist. In diesem Fall kann die Einheit aus Kamera und Gehäuse auch bei Kameras mit kleiner Baulänge auf einfache Art und Weise auf den gewünschten Verfahrweg der Kamera in Fahrzeuglängsrichtung abgestimmt werden.

In einer weiteren praktischen erfindungsgemäßen Anordnung ist der Abstand zwischen der Vorderseite der Kamera (Kameralinse) und der Schwenkachse größer als 40 mm. Bevorzugt ist dieser Abstand größer als 60 mm, besonders bevorzugt größer als 80 mm und weiter bevorzugt größer als 100 mm. Wenn die Kamera von der Ruhelage aus einer Ausrichtung in Fahrzeugquerrichtung in eine Ausrichtung in Fahrzeuglängsrichtung verfahren wird, entspricht der Abstand bei horizontaler Ausrichtung der Kamera ungefähr dem Verfahrweg. Ist die Kamera gegenüber der Horizontalen um einige Grad geneigt (z.B. um ca. 5° bis 20°), ist der Verfahrweg in Fahrzeuglängsrichtung etwas geringer. Insgesamt wird mit dieser Lösung in jedem Fall eine einfache und kostengünstige Möglichkeit geschaffen, eine Kamera in Ruhelage geschützt anzuordnen und in Betriebslage in eine prominente Position zu verfahren.

In einer praktischen Ausführungsform einer erfindungsgemäßen Anordnung ist das Antriebselement ein Rotationsaktuator. Ein solcher Rotationsaktuator hat den Vorteil, dass er eine einfache und nur wenige Bauteile umfassende Lösung für die Durchführung einer gewünschten Schwenkbewegung der Kamera zur Verfügung stellt. Bevorzugt ist es, wenn mit dem Rotationsaktuator ein Schwenkwinkel von mindestens 70° durchführbar ist, besonders bevorzugt ist ein Schwenkwinkel von 80° bis 180°, und weiter bevorzugt ein Schwenkwinkel von 90°. Es kann auch ein Rotationsaktuator eingesetzt werden, der nur in eine Richtung drehbar ist und die Kamera vollständig (360°) um die eigene Achse drehen kann. In diesem Fall ist zwar entsprechender Bauraum erforderlich, um die Kamera vollständig drehen zu können. Dafür kann die Kamera aber auch in der Ruhelage um 180° gegenüber der Betriebslage verschwenkt und das Risiko einer Schädigung der Linse damit minimiert werden. Unabhängig von der Größe des Schwenkwinkels des Rotationsaktuators ist es bevorzugt, wenn der Rotationsaktuator eine Verzahnung zur Übertragung des Antriebsmoments aufweist, insbesondere eine Innenverzahnung. Mit einer solchen Verzahnung können große Antriebsmomente sicher übertragen werden, wodurch sich ein besonders robustes Antriebskonzept ergibt.

Eine kostengünstig zu realisierende erfindungsgemäße Anordnung mit wenigen Bauteilen ergibt sich, wenn die Kamera oder ein die Kamera umgebendes Gehäuse mit einem gegenüber der Kamera bzw. gegenüber dem Gehäuse hervorragenden Drehabschnitt versehen ist. Dies gilt insbesondere für Kameras bzw. Gehäuse, deren Drehabschnitt komplementär zu einer Verzahnung im Aktuator ausgebildet ist. Diesbezüglich wird insbesondere auf eine Kamera oder ein die Kamera umgebendes Gehäuse mit einem eine Außenverzahnung umfassenden Drehabschnitt und einen Rotationsaktuator mit einer komplementär zu der Außenverzahnung umfassenden Innenverzahnung verwiesen. Alternativ können auch an der Kamera oder dem Gehäuse sowie an dem Rotationsaktuator Innenverzahnungen vorgesehen sein, die über einen außenverzahnten Antriebsbolzen als Zwischenelement drehfest verbunden sind. Ebenfalls möglich ist es, an der Kamera oder an dem Gehäuse eine Innenverzahnung auszubilden und einen Rotationsaktuator oder ein mit dem Rotationsaktuator gekoppeltes Verbindungselement mit einer komplementären Außenverzahnung zu verwenden.

In einer weiteren praktischen Ausführungsform einer erfindungsgemäßen Anordnung ist zwischen der Kamera und/oder dem die Kamera umgebenden Gehäuse einerseits und dem Rotationsaktuator andererseits ein Adapterelement mit einer Aufnahmebuchse zur mindestens teilweisen Aufnahme des Drehelements angeordnet. Das Adapterelement ist vorzugsweise fest mit dem Rotationsaktuator verbunden, insbesondere verschraubt. Durch Verwendung eines solchen Adapterelements kann als Rotationsaktuator zum einen ein Standardbauteil verwendet werden. Zum anderen kann eine in dem Rotationsaktuator ausgebildete Verzahnung mittels des Adapterelements wirksam gegen das Eindringen von Schmutz, Feuchtigkeit oder sonstigen Gegenständen geschützt werden, um so die Funktionssicherheit des Antriebs zu erhöhen. Darüber hinaus können an einem solchen Adapterelement einfach und kostengünstig individuelle Verbindungsabschnitte zur Befestigung des Rotationsaktuators und des Adapterelements an der Karosserie eines Kraftfahrzeuges ausgebildet werden, insbesondere an der Rückseite eines Kühlerschutzgitters oder an einem Stoßfängerquerträger. In diesem Fall kann das Adapterelement gleichzeitig als Halteelement dienen.

Es können sich bei einer erfindungsgemäßen Anordnung auch dann Vorteile ergeben, wenn das Antriebselement ein Linearsteller ist und zwischen dem Antriebselement und der mindestens einen Schwenkachse der Kamera eine Hebelkinematik mit mindestens einem ersten Hebel vorgesehen ist, um die lineare Antriebsbewegung des Antriebselements in eine Schwenkbewegung der Kamera umzuwandeln. In diesem Fall kann ein kostengünstig verfügbares und nur geringen Bauraum beanspruchendes Antriebselement zur Erzielung der Schwenkbewegung eingesetzt werden.

Gegenüber der vorstehend beschriebenen Lösung mit einem Hebel ist es weiter bevorzugt, wenn zwischen dem Antriebselement und der mindestens einen Schwenkachse der Kamera eine Hebelkinematik mit einem ersten Hebel und mindestens einem zweiten Hebel vorgesehen ist, die derart miteinander gekoppelt sind, dass eine lineare Antriebsbewegung des Antriebselements in eine Schwenkbewegung der Kamera umgewandelt wird. In diesem Fall sind zwar die Herstellungskosten etwas höher. Dafür kann jedoch aufgrund der mindestens zwei miteinander gekoppelten Hebel ein Antriebselement mit einem geringen Verfahrweg eingesetzt werden, um einen größeren Schwenkwinkel der Kamera zu bewirken. Beispielsweise kann durch Auswahl geeigneter Hebel mit einem linearen Verfahrweg von nur ca. 8 mm ein Schwenkwinkel von 90° erreicht werden. Dies ermöglicht es, eine erfindungsgemäße Anordnung auf kleinem Bauraum und mit einfachen Antriebselementen umzusetzen.

Bei einer wie zuletzt beschriebenen Anordnung sind das Antriebselement und der erste Hebel, der erste Hebel und der zweite Hebel und/oder der zweite Hebel und die Kamera vorzugsweise über Drehgelenke miteinander gekoppelt. Diese Drehgelenke können zusammenfallen mit den Schwenkachsen für die Kamera, dem ersten Hebel und/oder dem zweiten Hebel. Alternativ können Drehgelenke vorgesehen sein, um den ersten Hebel mit dem zweiten Hebel sowie den zweiten Hebel mit der Kamera oder einem Kameragehäuse zu verbinden und separate, von den Drehgelenken beabstandete Schwenkachsen für einzelne den ersten Hebel, den zweiten Hebel und/oder die Kamera bzw. ein die Kamera umgebendes Kameragehäuse miteinander zu verbinden. Die Schwenkachsen sind vorzugsweise karosseriefest angeordnet, d.h. der erste Hebel, der zweite Hebel und/oder die Kamera bzw. ein die Kamera umgebendes Gehäuse dreht jeweils um eine gegenüber der Karosserie des Kraftfahrzeugs festgelegte Schwenkachse.

Um eine kleine lineare Bewegung in eine möglichst große Schwenkbewegung umwandeln zu können, ist es bevorzugt, wenn der erste Hebel, welcher mit dem Antriebselement (insbesondere ein Stellelement eines Aktuators in Form eines Linearstellers) eine geringere Länge aufweist als der zweite Hebel, welcher einerseits mit dem ersten Hebel und andererseits mit der Kamera oder einem die Kamera umgebenden Gehäuse verbunden ist.

Bauraumtechnisch vorteilhaft ist es, wenn bei einer erfindungsgemäßen Anordnung das Antriebselement in Fahrzeugquerrichtung orientiert ist und die Kamera in Ruhelage ebenfalls in Fahrzeugquerrichtung orientiert ist. In diesem Fall ist die Ausdehnung einer erfindungsgemäßen Anordnung in Fahrzeuglängsrichtung besonders klein. Dies kommt insbesondere dann dem Fußgängerschutz zugute, wenn die Anordnung im Bereich eines Vorderwagens eines Kraftfahrzeuges und im Bereich vor einem Stoßfängerquerträger angeordnet ist.

In einer weiteren praktischen Ausführungsform einer erfindungsgemäßen Anordnung ist ein Halter für das Antriebselement und/oder die Kamera bzw. ein die Kamera umgebendes Gehäuse unmittelbar an dem Kühlerschutzgitter des Kraftfahrzeuges oder an einem Stoßfängerquerträger des Kraftfahrzeuges angeordnet. Besonders bevorzugt ist die direkte Verbindung am Kühlerschutzgitter, insbesondere in Form einer Clip-, Steck- oder Schraubverbindung. In diesem Fall ist die Kamera aufgrund der direkten Anbindung am Kühlerschutzgitter unmittelbar gegenüber dem Kühlerschutzgitter ausgerichtet. Ferner kann die Kamera innerhalb des Kühlerschutzgitters so angeordnet werden, dass sie in Fahrzeughochrichtung betrachtet nicht mit einem Querträger, insbesondere einem Stoßfängerquerträger, überlappt. Dies ist vorteilhaft für den Fußgängerschutz, da im Falle einer Fußgängerkollision die Kamera nicht auf einen in Fahrzeuglängsrichtung dahinter liegenden Querträger prallt, sondern über oder unter dem Querträger in Freiräume oder weichere Strukturen eindringen kann, d.h. es tritt kein "Verblocken" auf.

In einer anderen praktischen Ausführungsform einer erfindungsgemäßen Anordnung ist an der Kamera und/oder an dem Gehäuse ist ein Schutzabschnitt derart ausgebildet, dass im montierten Zustand der Anordnung eine Öffnung des Antriebselements von dem Schutzabschnitt zumindest teilweise überdeckt wird. So kann eine Öffnung des Antriebselements, insbesondere eine Öffnung mit einer dem Antrieb dienenden Verzahnung, wirksam vor dem Eindringen von Schmutz, Feuchtigkeit und/oder sonstigen Gegenständen geschützt werden.

Weitere praktische Ausführungsformen und Vorteile der Erfindung sind nachfolgend im Zusammenhang mit den Zeichnungen beschrieben. Es zeigen:
- Fig. 1: ein erstes Ausführungsbeispiel einer erfindungsgemäßen Anordnung in einer Explosionsdarstellung,
- Fig. 2: die im Bereich eines Kühlerschutzgitters eines Kraftfahrzeuges montierte Kamera aus Figur 1 in Ruhelage,
- Fig. 3: die Kamera aus Figur 2 in Betriebslage,
- Fig. 4a: die Kamera aus den Figuren 1-3 im Wesentlichen mit den für die Kinematik relevanten Elementen in einer Ansicht von oben in Ruhelage,
- Fig. 4b: die Anordnung aus den Figuren 1-3 im Wesentlichen mit den für die Kinematik relevanten Elementen in einer Ansicht von oben während des Verfahrens von der Ruhelage in die Betriebslage in einer Zwischenlage,
- Fig. 4c: die Anordnung aus den Figuren 1-3 im Wesentlichen mit den für die Kinematik relevanten Elementen in einer Ansicht von oben in Betriebslage,
- Fig. 5: die Anordnung aus den Figuren 1-3 im montierten Zustand in einer Ansicht von hinten,
- Fig. 6: die Anordnung aus den Figuren 1-3 im montierten Zustand in einer alternativen Montagevariante in einer Ansicht von hinten,
- Fig. 7: ein zweites Ausführungsbeispiel einer erfindungsgemäßen Anordnung in einer Explosionsdarstellung in einer Ansicht von schräg vorne,
- Fig. 8: die Anordnung aus Figur 7 in einer Explosionsdarstellung in einer Ansicht von schräg unten und
- Fig. 9: die Anordnung aus den Figuren 7 und 8 in einem montierten Zustand in Betriebslage und in Ruhelage (gestrichelte Position).

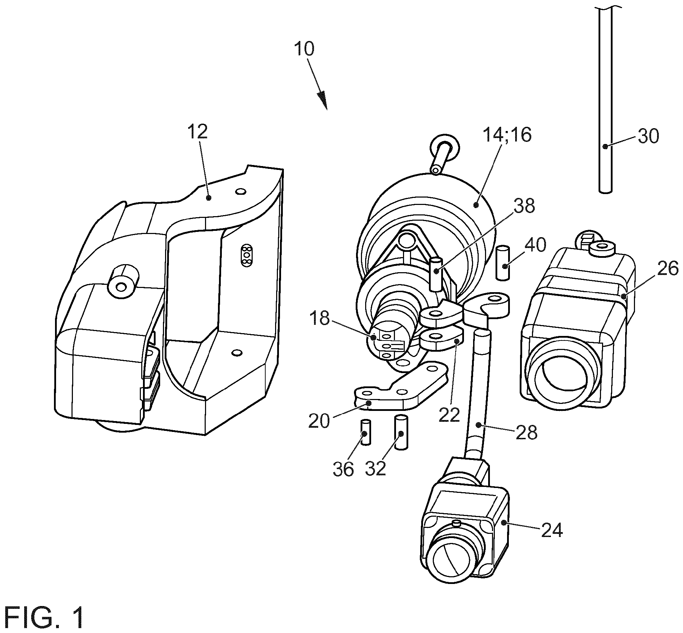

Figur 1 zeigt folgende Elemente einer erfindungsgemäßen Anordnung 10 in einer Explosionsdarstellung: ein Halteelement 12, einen als Antriebselement 14 dienenden Aktuator 16 mit einem linear verfahrbaren Stellglied 18, einen ersten Hebel 20, einen zweiten Hebel 22, eine Kamera 24, ein Gehäuse 26 zur Aufnahme der Kamera 24, ein Kabel 28 zur Herstellung einer Verbindung mit der Kamera 24 und ein Kabel 30 zur Herstellung einer Verbindung mit dem Aktuator 16.

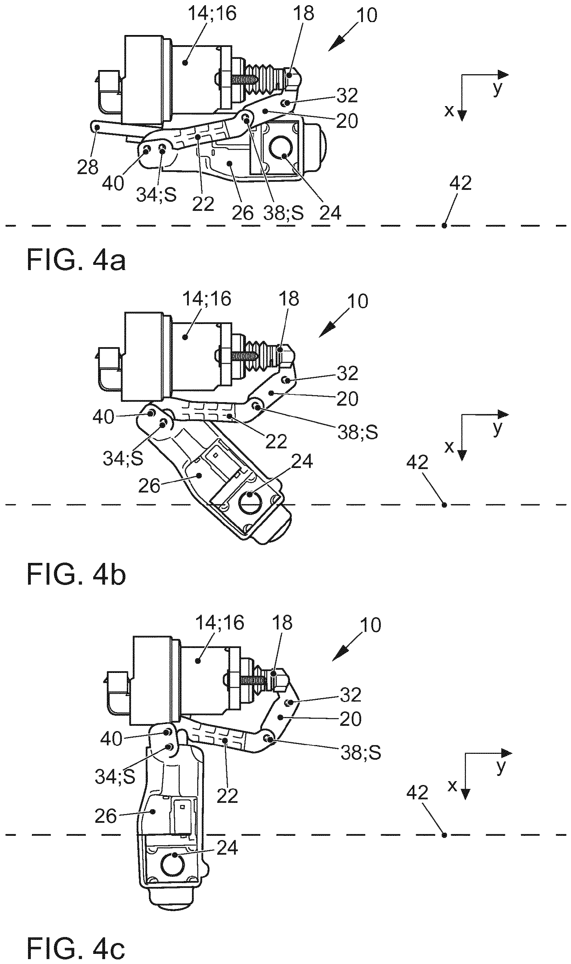

Der erste Hebel 20 ist im montierten Zustand der Anordnung 10 um einen im Gehäuse 26 festgelegten ersten Bolzen 32 schwenkbar gelagert. Das Gehäuse 26 ist im montierten Zustand der Anordnung 10 um einen ebenfalls im Gehäuse 26 festgelegten zweiten Bolzen 34 schwenkbar gelagert (in Figur 1 nicht erkennbar, siehe Figuren 4a-4c). Der erste Bolzen 32 stellt daher eine Drehachse für den ersten Hebel 20 dar, der zweite Bolzen 34 eine Drehachse für das Gehäuse 26.

Der erste Hebel 20 ist über einen ersten Verbindungsstift 36 mit dem Stellglied 18 des Aktuators 16 verbunden. Der erste Hebel 20 ist darüber hinaus über einen zweiten Verbindungsstift 38 mit dem zweiten Hebel 22 verbunden. Der zweite Hebel 22 ist über einen dritten Verbindungsstift 40 mit dem Gehäuse 26 verbunden.

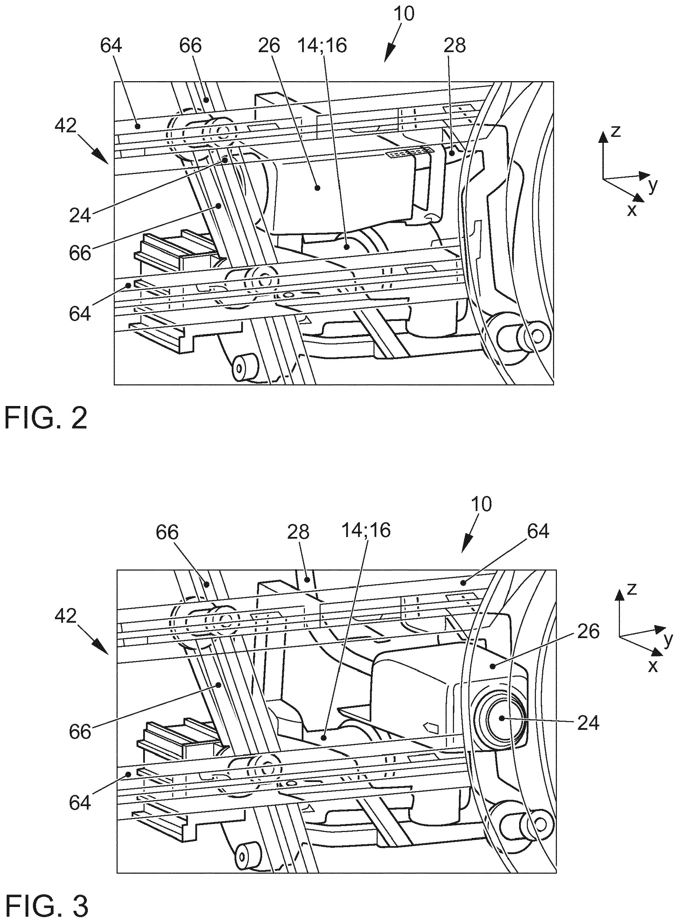

In den Figuren 2 und 3 ist die erfindungsgemäße Anordnung im Bereich eines Kühlerschutzgitters 42 mit horizontalen Rippen 64 und vertikalen Stegen 66 im Bereich der Fahrzeugfront eines Kraftfahrzeuges (nicht dargestellt) gezeigt. Wie zu erkennen ist, ist die Linse der Kamera 24 in Ruhelage im Wesentlichen in Fahrzeugquerrichtung (y-Richtung) orientiert (siehe Figur 2) und wird für die Betriebslage um 90° verschwenkt, um dann im Wesentlichen in Fahrtrichtung in Fahrzeuglängsrichtung (x-Richtung) orientiert zu sein. Mit im Wesentlichen ist gemeint, dass die Kamera 24 gegenüber der Horizontalen um einige Grad geneigt sein kann, beispielsweise in einem Winkel zwischen 0° und 30° nach unten in Richtung Fahrbahnoberfläche, bevorzugt in einem Winkel zwischen 0° und 20° und besonders bevorzugt in einem Winkel zwischen 5° und 15°.

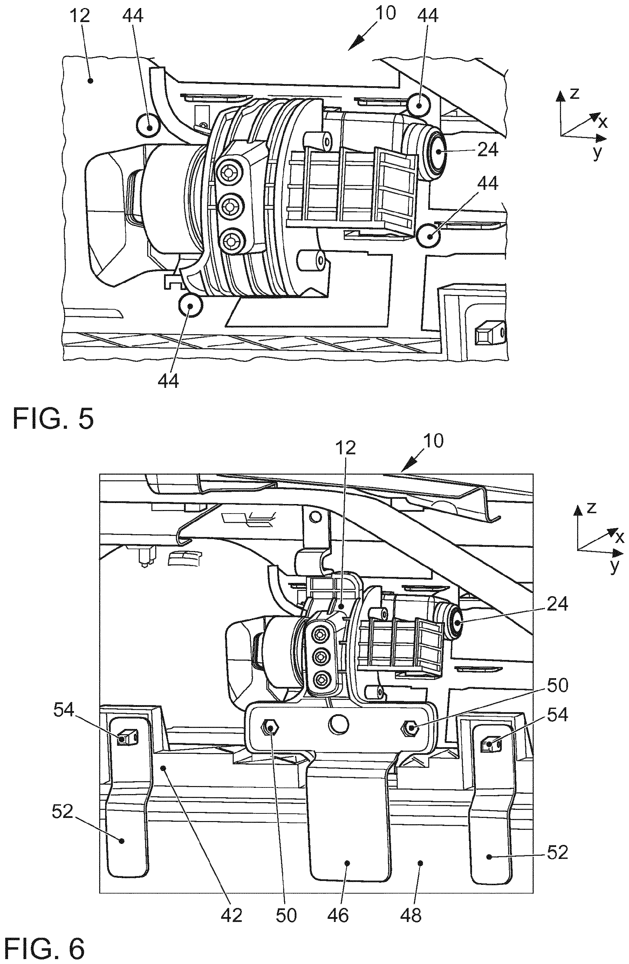

In den Figuren 5 und 6 sind verschiedene Montagemöglichkeiten einer erfindungsgemäßen Anordnung 10 gezeigt.

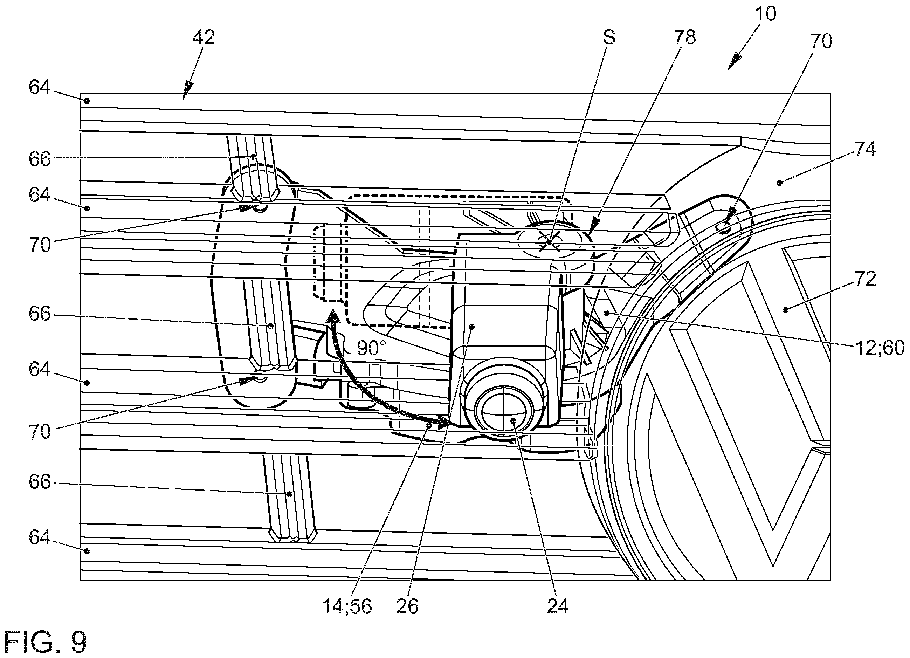

Bei der in Figur 5 gezeigten Montagevariante ist der Halter 12 an vier Verbindungsstellen 44 direkt mit dem Kühlerschutzgitter 42 verbunden, wobei in der gezeigten Ausführungsform eine Schraubverbindung gewählt wurde. Als Verbindungsstellen 44 des Kühlerschutzgitters 42 dienen verstärkte Bereiche des Kühlerschutzgitters 42, insbesondere Kreuzungspunkte aus horizontalen Rippen 66 mit weiteren insbesondere in Fahrzeughochrichtung, d.h. in zumindest teilweise vertikaler Richtung, verlaufenden Elementen, wie z.B. vertikaler Stege 68 oder der Rand 74 für die Anordnung eines Herstellerlogos 72 (vgl. hierzu Figur 9). Dies gilt insbesondere für aus Kunststoff hergestellte Kühlerschutzgitter 42.

Bei der in Figur 6 gezeigten Montagevariante ist der Halter 12 über ein Blech 46 fest mit dem Stoßfängerquerträger 48 verbunden, wobei in der gezeigten Ausführungsform das Blech 46 mit dem Stoßfängerquerträger 48 verschweißt ist und das Blech 46 an zwei Verbindungsstellen 50 mit dem Halter 12 verschraubt ist. In Figur 6 sind auch Haltebleche 52 zur Anbindung des Kühlerschutzgitters 42 über Rastverbindungen 54 zu erkennen, die ebenfalls mit dem Stoßfängerquerträger 48 verschweißt sind.

Die Kinematik der erfindungsgemäßen Anordnung 10 ist in den Figuren 4a-4c besonders gut zu erkennen. In diesen Figuren sind nur der Aktuator 16 mit Stellglied 18, der erste Hebel 20 und der zweite Hebel 22, die Kamera 24 und der die Kamera 24 umgebende Teil des Gehäuses 26 in Ansichten von oben in verschiedenen Stellungen des Stellgliedes 18 gezeigt. Wie zu erkennen ist, verschwenkt die Kamera 24 mit der erfindungsgemäßen Anordnung 10 durch einen sehr kleinen linearen Verfahrweg des Stellgliedes 18 um insgesamt 90° und fährt aufgrund der Kinematik relativ weit nach vorne aus dem Kühlerschutzgitter 42 heraus, dessen Vorderkante in den Figuren 4a-4c nur durch eine gestrichelte Linie dargestellt ist.

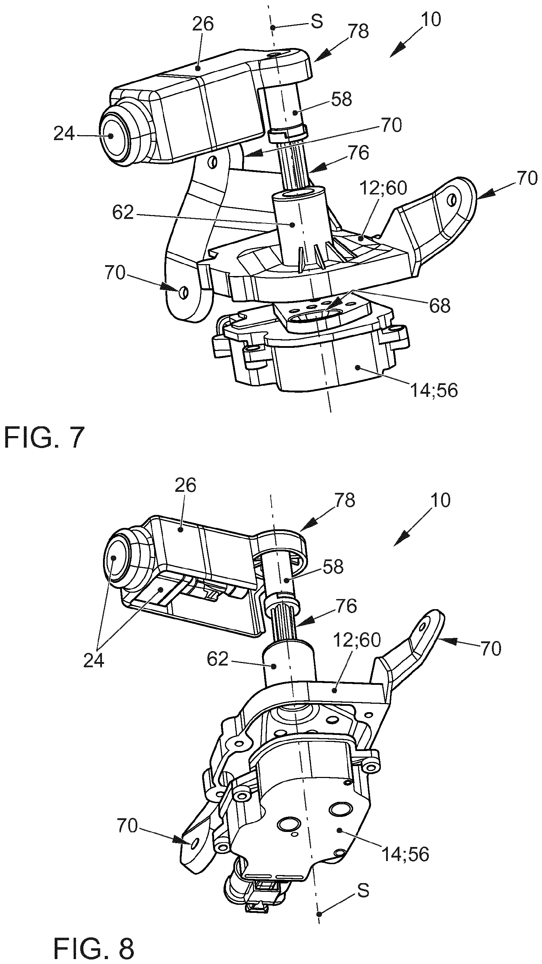

In den Figuren 7-9 ist eine zweite Ausführungsform einer erfindungsgemäßen Anordnung 10 mit folgenden Elementen gezeigt: ein Halteelement 12, ein als Antriebselement 14 dienender Rotationsaktuator 56, eine Kamera 24, ein die Kamera 24 umgebendes Gehäuse 26 zur Aufnahme der Kamera 24. In den Figuren 7-9 nicht dargestellt sind Anschlusskabel zur Herstellung einer Verbindung mit der Kamera 24 und zur Herstellung einer Verbindung mit dem Rotationsaktuator 56.

In Figur 9 ist zusätzlich zu den vorstehend genannten Elementen die erfindungsgemäße Anordnung 10 im montierten Zustand an einem Kühlerschutzgitter 42 gezeigt, wobei das Kühlerschutzgitter 42 mehrere in Fahrzeugquerrichtung (y-Richtung) verlaufende horizontale Rippen 64 und die Rippen 64 verbindende vertikale Stege 66 umfasst, die in Fahrzeughochrichtung verlaufen. Das Halteelement 12 weist in der gezeigten Ausführungsform drei Verbindungsbereiche 70 mit Durchgangsöffnungen auf, um das Halteelement 12 fest mit dem Kühlerschutzgitter 42 verbinden zu können. Vorliegend sind Schraubverbindungen vorgesehen, um das Halteelement 12 mit der Rückseite eines Kühlerschutzgitters 42 an verstärkten Bereichen (insbesondere an Kreuzungspunkten aus horizontalen Rippen 64 und weiteren insbesondere in Fahrzeughochrichtung verlaufenden Elementen, wie z.B. und vertikalen Stegen 66 oder Kreuzungspunkten aus horizontalen Rippen 64 mit einem ein Herstellerlogo 72 umgebenden Rand 74) zu verschrauben. Alternativ kann das Halteelement 12 so gestaltet sein, dass es - ähnlich wie in Verbindung mit Figur 6 - mit einem Stoßfängerquerträger 48 (nur in Figur 6 dargestellt) verbindbar ist.

Wie in Figur 9 erkennbar ist, dient das Halteelement 12 auch als Adapterelement 60 zur Verbindung des Gehäuses 26 mit dem Rotationsaktuator 56. Dazu weist das Adapterelement 60 eine (hier: zylindrische) Aufnahmebuchse 62 auf, die der Führung des an dem Gehäuse 26 ausgebildeten Drehabschnitts 58 dient (in Figur 7 und 8 dargestellt). In den Figuren 7 und 8 ist erkennbar, dass der Drehabschnitt 58 einen Bereich mit einer Außenverzahnung 76 aufweist und in dem Rotationsaktuator 56 ein komplementär ausgebildeter Antriebsbereich mit einer Innenverzahnung 68 ausgebildet ist. Im montierten Zustand der Anordnung 10 wird von der Innenverzahnung 68 ein Drehmoment auf die Außenverzahnung 76 übertragen, um das Gehäuse 26 um die Schwenkachse S drehend anzutreiben.

In Figur 9 ist die Kamera 24 mit dem Gehäuse 26 mit durchgezogenen Linien in ihrer Betriebslage und mit gestrichelten Linien in ihrer Ruhelage dargestellt. Der Schwenkwinkel beträgt in dieser Ausführungsform genau 90°. Die Oberseite des Drehabschnitts 58 umfasst einen radial auskragenden Schutzabschnitt 78, der die Oberseite der Aufnahmebuchse 62 im montierten Zustand abdeckt, um dem Eindringen von Schmutz, Feuchtigkeit und sonstigen Gegenständen in die Aufnahmebuchse 62 und in die Innenverzahnung 68 des Rotationsaktuators 56 entgegenzuwirken.

Die in Verbindung mit den Figuren 4a-4c beschriebene Kinematik des Herausschwenkens eines Gehäuses 26 kann mit einem Rotationsaktuator 56 - wie in den Figuren 7-9 gezeigt - analog realisiert werden. Der in den Figuren 4a-4c eingetragene Bolzen 34, welcher die Schwenkachse S für das Gehäuse 26 dargestellt, entspricht in diesem Fall der in den Figuren 7-9 eingetragenen Schwenkachse S, um welche der Drehabschnitt 58 mit Hilfe des Rotationsaktuators 56 gedreht wird. Mit Hilfe der in den Figuren 7-9 gezeigten Anordnung 10 können im Vergleich zu der in Verbindung mit den Figuren 1-6 beschriebenen Hebelkinematik mit weniger Bauteilen größere Drehmomente übertragen werden. Daher ist diese Ausführungsform aufgrund geringerer Montagekosten und einer höheren Robustheit (weniger bewegte Teile) bevorzugt.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Anordnung
- 12: Halter
- 14: Antriebselement
- 16: Aktuator
- 18: Stellglied
- 20: erster Hebel
- 22: zweiter Hebel
- 24: Kamera
- 26: Gehäuse
- 28: Kabel
- 30: Kabel
- 32: erster Bolzen
- 34: zweiter Bolzen
- 36: erster Verbindungsstift
- 38: zweiter Verbindungsstift
- 40: dritter Verbindungsstift
- 42: Kühlerschutzgitter
- 44: Verbindungsstelle
- 46: Blech
- 48: Stoßfängerquerträger
- 50: Verbindungsstelle
- 52: Halteblech
- 54: Rastverbindung
- 56: Rotationsaktuator
- 58: Drehabschnitt
- 60: Adapterelement
- 62: Aufnahmebuchse
- 64: horizontale Rippen
- 66: vertikale Stege
- 68: Innenverzahnung
- 70: Verbindungsbereich
- 72: Herstellerlogo
- 74: Rand
- 76: Außenverzahnung
- 78: Schutzabschnitt

## Patentansprüche

1. Kraftfahrzeug mit einem Kühlerschutzgitter (42) und einer an dem Kraftfahrzeug im Bereich des Kühlerschutzgitters (42) angeordneten ausfahrbaren Kamera (24), wobei die Kamera (24) mittels eines Antriebselements (14) zwischen einer geschützten Ruhelage und einer überwiegend in Fahrzeuglängsrichtung orientierten Betriebslage verfahrbar ist, wobei die Kamera (24) um mindestens eine Schwenkachse S verschwenkbar gelagert ist, wobei die geschützte Ruhelage eine überwiegend in Fahrzeugquerrichtung orientierte Ausrichtung der Kamera (24) ist, **dadurch gekennzeichnet dass** die Höhe der Kamera (24) und/oder eines die Kamera (24) umgebenden Gehäuses (26) geringer ist als der Abstand zweier benachbarter Rippen (64) des Kühlerschutzgitters (42) und die Kamera (24) in ihrer Betriebslage zwischen zwei benachbarten Kühlerschutzrippen (64) hervorschwenkt.

2. Kraftfahrzeug nach dem vorstehenden Anspruch, **dadurch gekennzeichnet, dass** die Kamera (24) in einem Gehäuse (26) angeordnet ist und das Gehäuse (26) um eine karosseriefeste Schwenkachse S verschwenkbar gelagert ist.

3. Kraftfahrzeug nach dem vorstehenden Anspruch, **dadurch gekennzeichnet, dass** der Abstand zwischen der Vorderseite der Kamera (24) und der Schwenkachse S der Kamera (24) bzw. eines die Kamera umgebenden Gehäuses (26) größer ist als 40 mm.

4. Kraftfahrzeug nach einem oder mehreren der vorstehenden Ansprüche, **dadurch gekennzeichnet, dass** das Antriebselement (14) ein Rotationsaktuator (56) mit einem Schwenkbereich von mindestens 70° ist.

5. Kraftfahrzeug nach dem vorstehenden Anspruch, **dadurch gekennzeichnet, dass** die Kamera (24) oder ein die Kamera (24) umgebendes Gehäuse (26) mit einer gegenüber der Kamera (24) bzw. gegenüber dem Gehäuse (26) hervorragenden Drehabschnitt (58) versehen ist.

6. Kraftfahrzeug nach dem vorstehenden Anspruch, **dadurch gekennzeichnet, dass** zwischen der Kamera (24) und/oder dem die Kamera (24) umgebenden Gehäuse (26) einerseits und dem Rotationsaktuator (56) andererseits ein Adapterelement (60) mit einer Aufnahmebuchse (62) zur mindestens teilweisen Aufnahme des Drehelements (58) angeordnet ist.

7. Kraftfahrzeug nach einem oder mehreren der vorstehenden Ansprüche, **dadurch gekennzeichnet, dass** das Antriebselement (14) ein Linearsteller ist und zwischen dem Antriebselement (14) und der mindestens einen Schwenkachse S der Kamera (24) eine Hebelkinematik mit mindestens einem ersten Hebel (20) vorgesehen ist, um die lineare Antriebsbewegung des Antriebselements (14) in eine Schwenkbewegung der Kamera (24) umzuwandeln.

8. Kraftfahrzeug nach einem der Ansprüche 1-3, **dadurch gekennzeichnet, dass** zwischen dem Antriebselement (14) und der mindestens einen Schwenkachse S der Kamera (24) eine Hebelkinematik mit einem ersten Hebel (20) und mindestens einem zweiten Hebel (22) vorgesehen ist, die derart miteinander gekoppelt sind, dass eine lineare Antriebsbewegung des Antriebselements (14) in eine Schwenkbewegung der Kamera (24) umgewandelt wird.

9. Kraftfahrzeug nach dem vorstehenden Anspruch, **dadurch gekennzeichnet, dass** das Antriebselement (14) und der erste Hebel (20), der erste Hebel (20) und der zweite Hebel (22) und/oder der zweite Hebel (22) und die Kamera (24) oder ein die Kamera (24) umgebendes Gehäuse (26) über Drehgelenke miteinander gekoppelt sind.

10. Kraftfahrzeug nach einem oder mehreren der vorstehenden Ansprüche, **dadurch gekennzeichnet, dass** mindestens eines der folgenden Merkmale vorgesehen ist:
a) das Antriebselement (14) ist in Fahrzeugquerrichtung orientiert und die Kamera (24) in Ruhelage ist ebenfalls in Fahrzeugquerrichtung orientiert,
b) ein Halter (12) für das Antriebselement (14) und/oder die Kamera (24) und/oder ein die Kamera (24) umgebendes Gehäuse (26) ist unmittelbar an dem Kühlerschutzgitter (42) des Kraftfahrzeuges oder an einem Stoßfängerquerträger (48) des Kraftfahrzeuges angeordnet,
c) an der Kamera (24) und/oder an dem Gehäuse (26) ist ein Schutzabschnitt (78) derart ausgebildet, dass im montierten Zustand der Anordnung (10) eine Öffnung des Antriebselements (14) von dem Schutzabschnitt (78) zumindest teilweise überdeckt wird.

## Claims

1. Motor vehicle with a radiator guard lattice (42) and an extensible camera (24) arranged on the motor vehicle in the region of the radiator guard lattice (42), wherein the camera (24) is movable by means of a driving element (14) between a protected inoperative position and an operating position predominantly oriented in the longitudinal direction of the vehicle, wherein the camera (24) is mounted pivotably about at least one pivot axis S, wherein the protected inoperative position is an alignment of the camera (24) that is oriented predominantly in the transverse direction of the vehicle, **characterized in that** the height of the camera (24) and/or of a housing (26) surrounding the camera (24) is smaller than the distance between two adjacent ribs (64) of the radiator guard lattice (42), and the camera (24) in its operating position pivots out between two adjacent radiator guard fins (64).

2. Motor vehicle according to the preceding claim, **characterized in that** the camera (24) is arranged in a housing (26), and the housing (26) is mounted pivotably about a body-mounted pivot axis (S).

3. Motor vehicle according to the preceding claim, **characterized in that** the distance between the front side of the camera (24) and the pivot axis S of the camera (24) or of a housing (26) surrounding the camera is greater than 40 mm.

4. Motor vehicle according to one or more of the preceding claims, **characterized in that** the driving element (14) is a rotation actuator (56) having a pivoting range of at least 70°.

5. Motor vehicle according to the preceding claim, **characterized in that** the camera (24) or a housing (26) surrounding the camera (24) is provided with a rotary portion (58) protruding in relation to the camera (24) or in relation to the housing (26) .

6. Motor vehicle according to the preceding claim, **characterized in that** an adapter element (60) having a receiving socket (62) for at least partially accommodating the rotary element (58) is arranged between the camera (24) and/or the housing (26) surrounding the camera (24), on the one hand, and the rotation actuator (56), on the other hand.

7. Motor vehicle according to one or more of the preceding claims, **characterized in that** the driving element (14) is a linear actuator, and lever kinematics having at least one first lever (20) are provided between the driving element (14) and the at least one pivot axis S of the camera (24) in order to convert the linear driving movement of the driving element (14) into a pivoting movement of the camera (24).

8. Motor vehicle according to one of Claims 1-3, **characterized in that** lever kinematics having a first lever (20) and at least one second lever (22) are provided between the driving element (14) and the at least one pivot axis S of the camera (24), said levers being coupled to each other in such a manner that a linear driving movement of the driving element (14) is converted into a pivoting movement of the camera (24).

9. Motor vehicle according to the preceding claim, **characterized in that** the driving element (14) and the first lever (20), the first lever (20) and the second lever (22), and/or the second lever (22) and the camera (24) or a housing (26) surrounding the camera (24) are coupled to each other via rotary joints.

10. Motor vehicle according to one or more of the preceding claims, **characterized in that** at least one of the following features is provided:
a) the driving element (14) is oriented in the transverse direction of the vehicle and the camera (24) in the inoperative position is likewise oriented in the transverse direction of the vehicle,
b) a holder (12) for the driving element (14) and/or the camera (24) and/or a housing (26) surrounding the camera (24) is arranged directly on the radiator guard lattice (42) of the motor vehicle or on a bumper cross member (48) of the motor vehicle,
c) a protective portion (78) is formed on the camera (24) and/or on the housing (26) in such a manner that, in the mounted state of the arrangement (10), an opening of the driving element (14) is at least partially covered by the protective portion (78).

## Revendications

1. Véhicule automobile comprenant une grille de protection de radiateur (42) et une caméra (24) pouvant être sortie, disposée sur le véhicule automobile dans la région de la grille de protection de radiateur (42), la caméra (24) pouvant être déplacée au moyen d'un élément d'entraînement (14) entre une position de repos protégée et une position fonctionnelle orientée essentiellement dans la direction longitudinale du véhicule, la caméra (24) étant supportée de manière à pouvoir pivoter autour d'au moins un axe de pivotement S,
la position de repos protégée étant une orientation de la caméra (24) orientée essentiellement dans la direction transversale du véhicule, **caractérisé en ce que** la hauteur de la camera (24) et/ou d'un boîtier (26) entourant la caméra (24) est inférieure à la distance entre deux ailettes adjacentes (64) de la grille de protection de radiateur (42) et la caméra (24), dans sa position fonctionnelle, sortant par pivotement entre deux ailettes de protection de radiateur adjacentes (64).

2. Véhicule automobile selon la revendication précédente, **caractérisé en ce que** la caméra (24) est disposée dans un boîtier (26) et le boîtier (26) est supporté de manière pivotante autour d'un axe de pivotement S fixé à la carrosserie.

3. Véhicule automobile selon la revendication précédente, **caractérisé en ce que** la distance entre le côté avant de la caméra (24) et l'axe de pivotement S de la caméra (24) ou d'un boîtier (26) entourant la caméra est supérieure à 40 mm.

4. Véhicule automobile selon l'une quelconque ou plusieurs des revendications précédentes, **caractérisé en ce que** l'élément d'entraînement (14) est un actionneur de rotation (56) avec une plage de pivotement d'au moins 70°.

5. Véhicule automobile selon la revendication précédente, **caractérisé en ce que** la caméra (24) ou un boîtier (26) entourant la caméra (24) est pourvu(e) d'une partie rotative (58) faisant saillie par rapport à la caméra (24) ou par rapport au boîtier (26).

6. Véhicule automobile selon la revendication précédente, **caractérisé en ce qu'**entre la caméra (24) et/ou le boîtier (26) entourant la caméra (24) d'une part et l'actionneur de rotation (56) d'autre part, est disposé un élément adaptateur (60) avec une douille de réception (62) pour recevoir au moins en partie l'élément rotatif (58) .

7. Véhicule automobile selon l'une quelconque ou plusieurs des revendications précédentes, **caractérisé en ce que** l'élément d'entraînement (14) est un actionneur linéaire et une cinématique à levier avec au moins un premier levier (20) est prévue entre l'élément d'entraînement (14) et l'au moins un axe de pivotement S de la caméra (24), afin de convertir le mouvement d'entraînement linéaire de l'élément d'entraînement (14) en un mouvement de pivotement de la caméra (24).

8. Véhicule automobile selon l'une quelconque des revendications 1 à 3, **caractérisé en ce qu'**une cinématique à levier avec un premier levier (20) et au moins un deuxième levier (22) est prévue entre l'élément d'entraînement (14) et l'au moins un axe de pivotement S de la caméra (24), lesquels leviers sont accouplés l'un à l'autre de telle sorte qu'un mouvement d'entraînement linéaire de l'élément d'entraînement (14) soit converti en un mouvement de pivotement de la caméra (24).

9. Véhicule automobile selon la revendication précédente, **caractérisé en ce que** l'élément d'entraînement (14) et le premier levier (20), le premier levier (20) et le deuxième levier (22) et/ou le deuxième levier (22) et la caméra (24) ou un boîtier (26) entourant la caméra (24) sont accouplés les uns aux autres par le biais d'articulations pivotantes.

10. Véhicule automobile selon l'une quelconque ou plusieurs des revendications précédentes, **caractérisé en ce qu'**au moins l'une des caractéristiques suivantes est prévue :
a) l'élément d'entraînement (14) est orienté dans la direction transversale du véhicule et la caméra (24), dans la position de repos, est également orientée dans la direction transversale du véhicule,
b) un support (12) pour l'élément d'entraînement (14) et/ou la caméra (24) et/ou un boîtier (26) entourant la caméra (24) est disposé directement sur la grille de protection de radiateur (42) du véhicule automobile ou sur un support transversal de pare-chocs (48) du véhicule automobile,
c) une partie de protection (78) est réalisée sur la caméra (24) et/ou sur le boîtier (26), de telle sorte que, dans l'état monté de l'agencement (10), une ouverture de l'élément d'entraînement (14) soit au moins en partie recouverte par la partie de protection (78).
